# FASCICULE DE BREVET EUROPEEN

(11) **EP 3 864 271 B1**
(45) Date de publication et mention de la délivrance du brevet: **27.03.2024**
(21) Numéro de dépôt: 19835454.0
(22) Date de dépôt: 21.11.2019
(51) Int. Cl.: F02C 3/107, F02C 7/36, F01D 25/16

(54) **AGENCEMENT DE TURBORÉACTEUR DOUBLE FLUX À RÉDUCTEUR ÉPICYCLOÏDAL OU PLANÉTAIRE**
ZWEISTRÖMIGE TURBOSTRAHLTRIEBWERKSANORDNUNG MIT PLANETENGETRIEBE ODER PLANETENUNTERSETZUNGSGETRIEBE
DUAL-FLOW TURBOFAN ENGINE ARRANGEMENT WITH EPICYCLIC OR PLANETARY REDUCTION GEAR

(30) Priorité: 27.11.2018 FR 1871931
(43) Date de publication de la demande: 18.08.2021
(73) Titulaire: SAFRAN AIRCRAFT ENGINES, 75015 Paris (FR)
(72) Inventeur: TAN-KIM, Alexandre, Jean-Marie, 77550 MOISSY-CRAMAYEL (FR); BENSLAMA, Yanis, 77550 MOISSY-CRAMAYEL (FR); DIEVART, Jérémy, 77550 MOISSY-CRAMAYEL (FR); BECOULET, Julien, Fabien, Patrick, 77550 MOISSY-CRAMAYEL (FR)
(74) Mandataire: Brevalex
(86) Numéro de dépôt international: PCT/FR2019/052774
(87) Numéro de publication internationale: WO 2020/109702

(56) Documents cités:
- EP-A2- 2 199 568
- US-A- 3 673 802
- US-A1- 2013 287 575

## Description

### DOMAINE TECHNIQUE

L'invention concerne un agencement de turboréacteur double corps intégrant un réducteur épicycloidal ou planétaire.

### ÉTAT DE LA TECHNIQUE ANTÉRIEURE

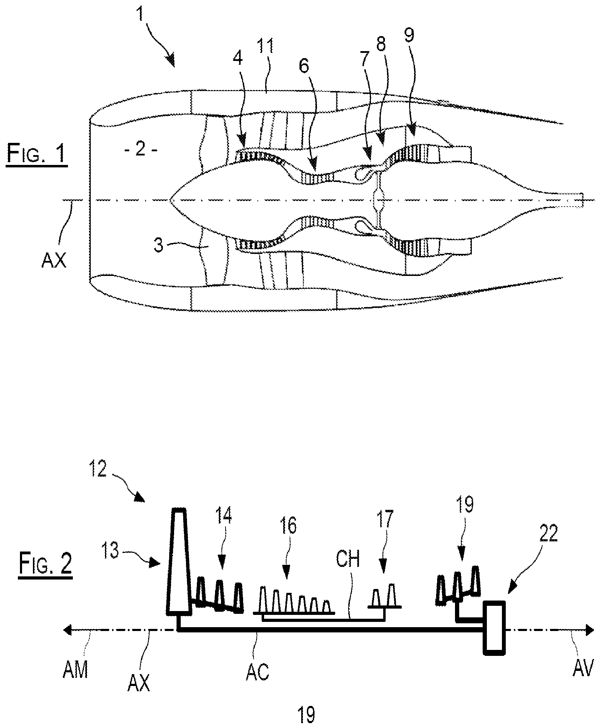

Dans un tel moteur 1 représenté sur la figure 1, l'air est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé dans des étages de compression 4 et 6 avant d'arriver dans une chambre de combustion 7, après quoi il est détendu à travers une turbine haute pression 8 et une turbine basse pression 9 avant d'être évacué vers l'arrière. Le flux secondaire est quant à lui propulsé directement vers l'arrière par la soufflante dans une veine délimitée par le carter 11.

Un tel moteur de type double-corps comporte un corps dit basse pression par lequel la soufflante 3 est couplée à la turbine basse pression, et un corps dit haute pression par lequel le compresseur est couplé à la turbine haute pression, ces deux corps étant coaxiaux et indépendants l'un de l'autre en rotation.

Grâce à un réducteur interposé entre la turbine basse pression et la soufflante, la turbine basse pression tourne plus vite que la soufflante qu'elle entraîne, afin d'accroître le rendement. Dans cette configuration, le corps basse pression comporte un arbre central d'entrainement de la soufflante et un rotor portant la turbine basse pression en étant lié à l'arbre central par le réducteur.

Les corps haute pression et basse pression sont maintenus par des paliers portés par des éléments structuraux du moteur. En pratique, le corps basse pression est un élément critique de l'agencement, car son arbre central s'étend sensiblement sur toute la longueur du moteur, de sorte qu'en service, c'est-à-dire lorsqu'il tourne, il peut être sujet à des modes vibratoires susceptibles de conduire à la ruine du moteur. En particulier, du fait de sa longueur importante, le premier mode de vibration en flexion de l'arbre central se trouve être dans sa plage de fonctionnement, c'est-à-dire dans la plage de fréquences correspondant à ses fréquences de rotation.

Cette situation nécessite de réaliser un équilibrage à grande vitesse de l'arbre central, mais également de prévoir des paliers capables d'amortir ses modes vibratoires pour limiter les éventuelles instabilités. De tels paliers, généralement désignés par l'acronyme SFD signifiant « *squeeze film dampers* » comportent une cage souple fixe portant un roulement recevant le corps basse pression, et autour de laquelle est maintenue une pression hydraulique, ce type de palier étant coûteux à mettre en oeuvre.

Les documents EP2199568A2, US3673802A et US2013/287575A1 divulguent des turboréacteurs selon l'art antérieur. Le but de l'invention est d'apporter des solutions d'agencement permettant d'améliorer le maintien des éléments rotatifs basse pression pour limiter le recours à des paliers complexes d'amortissement de modes vibratoires.

### EXPOSÉ DE L'INVENTION

A cet effet, l'invention a pour objet un turboréacteur à double flux comportant un arbre central entouré par un corps haute pression coaxiaux et indépendants en rotation, ce turboréacteur comportant depuis l'amont vers l'aval considérés selon le sens de circulation du flux qui le traverse lorsqu'il est en service :
- une soufflante entraînée par l'arbre central ;
- un compresseur haute pression et une turbine haute pression faisant partie du corps haute pression ;
- un carter inter-turbines ;
- une turbine basse pression ;
- un carter d'échappement ;
ce turboréacteur comportant en outre :
- un rotor basse pression qui entoure l'arbre central et qui comprend la turbine basse pression ;
- un palier amont de rotor porté par le carter inter-turbines et qui guide en rotation le rotor basse pression en étant situé en aval du compresseur haute pression ;
- un palier aval de rotor porté par le carter d'échappement, et qui guide en rotation le rotor basse pression ;
- un réducteur par l'intermédiaire duquel le rotor basse pression entraine l'arbre central, ce réducteur étant situé en aval du palier aval de rotor ;
- un palier aval d'arbre qui guide en rotation l'arbre central en étant situé en aval du palier aval de rotor.

Avec cet agencement, la vitesse de l'arbre central est abaissée et sa longueur est augmentée grâce au palier d'arbre situé en aval, ce qui contribue à diminuer les fréquences de ses modes propres pour les éloigner des fréquences de rotation. L'abaissement de cette vitesse permet également d'augmenter le diamètre de soufflante sans que la vitesse en extrémité des pales de cette soufflante ne soit excessive.

L'invention concerne également un turboréacteur ainsi défini, dans lequel le palier aval d'arbre est porté par le carter d'échappement en étant situé en aval du réducteur.

L'invention concerne également un turboréacteur ainsi défini, comprenant un palier médian basse pression porté par le carter inter-turbines et guidant en rotation l'arbre central.

L'invention concerne également un turboréacteur ainsi défini, comprenant un cône de sortie porté par le carter d'échappement, et dans lequel le palier aval d'arbre est situé dans un espace interne du cône de sortie.

L'invention concerne également un turboréacteur ainsi défini, dans lequel le réducteur est situé à l'intérieur de l'espace interne.

L'invention concerne également un turboréacteur ainsi défini, dans lequel le rotor basse pression est équipé d'un élément radialement flexible situé entre le palier aval de rotor et le réducteur.

L'invention concerne également un turboréacteur ainsi défini, comportant un compresseur basse pression entraîné par l'arbre central en étant situé entre la soufflante et le compresseur haute pression.

L'invention concerne également un turboréacteur ainsi défini, dans lequel le réducteur est un réducteur épicycloïdal comprenant :
- des satellites portés par un porte satellites qui est porté par l'arbre central ;
- une couronne interne qui est portée par le rotor basse pression ;
- une couronne externe qui est portée par le carter d'échappement ;
- chaque satellite étant engrené avec la couronne interne et la couronne externe.

L'invention concerne également un turboréacteur ainsi défini, dans lequel le réducteur est un réducteur planétaire comprenant :
- des satellites portés par un porte satellites qui est porté par le carter d'échappement ;
- une couronne interne qui est portée par le rotor basse pression ;
- une couronne externe qui est portée par l'arbre central ;
- chaque satellite étant engrené avec la couronne interne et la couronne externe.

### BRÈVE DESCRIPTION DES DESSINS

[Fig. 1] est une vue en coupe longitudinale d'un turboréacteur double flux et double corps connu ;
[Fig. 2] est une vue schématique en coupe longitudinale d'une architecture de turboréacteur selon l'invention ;
[Fig. 3] est une vue schématique en coupe longitudinale d'une portion aval d'architecture de turboréacteur selon un premier mode de réalisation de l'invention ;
[Fig. 4] est une vue schématique en coupe longitudinale d'une portion aval d'architecture de turboréacteur selon un deuxième mode de réalisation de l'invention ;
[Fig. 5] est une vue schématique en coupe longitudinale d'une portion aval d'architecture de turboréacteur selon un troisième mode de réalisation de l'invention ;
[Fig. 6] est une vue schématique en coupe longitudinale d'une portion aval d'architecture de turboréacteur selon un quatrième mode de réalisation de l'invention ;
[Fig. 7] est une vue schématique en coupe longitudinale d'une portion aval d'architecture de turboréacteur selon un cinquième mode de réalisation de l'invention.

### EXPOSÉ DÉTAILLÉ DE MODES DE RÉALISATION PARTICULIERS

Comme représenté schématiquement sur la figure 2, le moteur selon l'invention présente une architecture comprenant une soufflante 13 à sa partie amont AM suivie d'un compresseur basse pression 14. La soufflante et le compresseur basse pression sont entraînés en rotation par un arbre central AC s'étendant sur l'essentiel de la longueur du moteur, la soufflante étant traversée par l'ensemble du flux entrant dans ce moteur.

Les directions amont AM et aval AV sont définies par rapport au sens de circulation du flux dans le moteur le long de son axe longitudinal AX, conformément aux conventions usuelles.

Un compresseur haute pression 16 situé immédiatement en aval AV du compresseur 14 comprime le fluide du flux primaire ayant traversé le compresseur basse pression, avant son admission dans une chambre de combustion non représentée située immédiatement en aval de ce compresseur haute pression 16.

Après passage dans la chambre de combustion, le fluide est détendu à travers une turbine haute pression 17 qui entraine le compresseur 16. Les aubages du compresseur haute pression 16 et de la turbine haute pression 17 sont portés par un même corps haute pression CH ou font partie intégrante de celui-ci. Ce corps haute pression CH s'étend dans la région centrale du moteur le long de l'axe AX, il entoure l'arbre central AC en étant complètement indépendant en rotation de celui-ci.

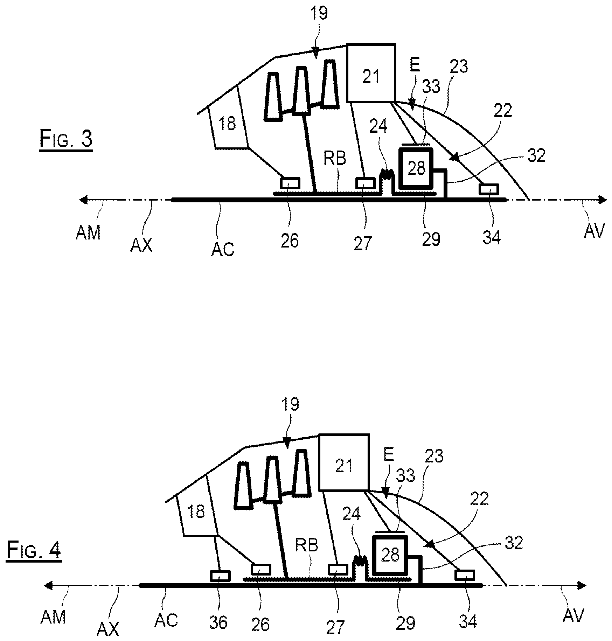

Après avoir traversé la turbine haute pression 17, le fluide transite dans un carter inter-turbines repéré par 18 sur la figure 3, avant de traverser une turbine basse pression 19, pour être ensuite évacué à travers un carter d'échappement 21.

Le carter inter-turbines 18 comporte une virole externe et une virole interne concentriques délimitant entre elles un espace annulaire de passage du flux primaire, ainsi qu'un ensemble de pales radiales fixes reliant chacune la virole externe à la virole interne et permettant de dévriller le flux primaire. De manière analogue, le carter d'échappement 21 comporte une virole externe et une virole interne concentriques délimitant un espace annulaire de passage du flux primaire détendu, ainsi qu'un ensemble de bras radiaux fixes reliant chacun ces deux viroles l'une à l'autre.

La turbine basse pression 19 est liée en rotation à l'arbre central par un réducteur épicycloïdal 22 situé à son aval AV, et grâce auquel elle tourne plus vite que la soufflante 13, afin d'améliorer le rendement du moteur.

Comme visible plus clairement sur la figure 3, le carter d'échappement 21 porte un cône de sortie 23 qui ferme la région aval du moteur située radialement à l'intérieur de la veine primaire, ce cône de sortie 23 s'étendant vers l'aval.

Le réducteur 22 est situé à l'intérieur d'un espace interne E délimité par le carter d'échappement 21 et par le cône de sortie 23 prolongeant ce carter 21, en étant relié à l'arbre central AC et à un rotor RB portant la turbine basse pression.

Ce rotor RB qui entoure l'arbre central AC s'étend depuis une partie médiane par laquelle il porte les disques ou aubages de la turbine basse pression, jusqu'à une partie aval par laquelle il est accouplé au réducteur. Ce rotor RB comporte dans sa région centrale, un élément radialement flexible 24.

Cet élément flexible 24 est souple selon la direction radiale pour autoriser une excentration de la partie amont du rotor RB par rapport à sa partie aval tout en assurant une transmission de couple d'une partie à l'autre.

Comme visible sur la figure 3, le rotor basse pression RB est maintenu et guidé en rotation par un palier amont 26 situé en amont de la turbine basse pression 19 et par un palier aval 27 situé entre cette turbine basse pression 19 et l'élément radialement flexible 24. Le palier amont de rotor 26 est porté par le carter inter-turbines 18, et le palier aval de rotor 27 est porté par le carter d'échappement 21. Au moins l'un des deux paliers de rotor 26 et 27 est un palier de butée, c'est-à-dire récupérant l'effort axial de poussée généré par la turbine basse pression pour le transférer à la structure du moteur.

Ce réducteur comporte des pignons satellites 28 entourant une couronne interne 29, encore appelée couronne solaire, et entourés par une couronne externe 33 en étant chacun engrené avec ces deux couronnes, ces pignons 28 étant portés par un porte satellite 32.

Dans le cas de la figure 3, le réducteur qui est repéré par 22 est de type épicycloïdal, c'est-à-dire que le porte satellites 32 est mobile en rotation en étant rigidement solidaire de l'arbre central AC. La couronne interne 29 est quant à elle rigidement solidaire du rotor basse pression RB alors que la couronne externe 33 est rigidement solidaire du carter d'échappement 21 en étant portée par celui-ci.

L'arbre central AC est porté et guidé en rotation par un palier amont non visible sur la figure 3 et situé en partie amont du moteur, et par un palier aval d'arbre central 34 qui est situé en aval du réducteur 22, en étant porté par le carter d'échappement 21. Comme visible sur les figures, le palier aval 34 est situé dans un espace interne E du cône de sortie 23.

Le maintien de l'arbre central AC peut être amélioré en prévoyant un palier médian basse pression 36, comme représenté sur la figure 4, ce palier médian étant porté par le carter inter-turbines 18 et recevant l'arbre central AC pour supporter sa région médiane. L'ajout de ce palier médian 36 permet d'accroître le maintien de l'arbre central AC pour diminuer encore les fréquences de ses modes vibratoires.

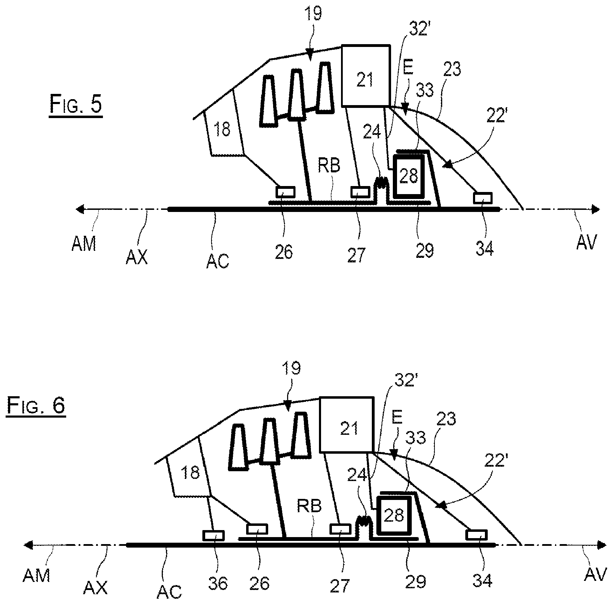

Les exemples des figures 5 et 6 montrent des modes de réalisation ayant respectivement les mêmes architectures que dans les figures 3 et 4, mais dans lesquels le réducteur, repéré par 22', est un réducteur planétaire et non pas épicycloïdal.

Ce Réducteur planétaire 22' comporte aussi des pignons satellites 28 entourant une couronne interne 29 et entourés par une couronne externe 33 en étant chacun engrené avec ces deux couronnes, ces pignons 28 étant portés par un porte satellite 32'.

Le porte satellites, repéré par 32', est fixe en étant porté par le carter d'échappement 21, et la couronne externe 33 est mobile en étant rigidement solidaire de l'arbre central AC. La couronne interne 29 est quant à elle portée par le rotor basse pression RB, comme dans les modes de réalisation des figures 3 et 4.

Ainsi, dans l'exemple de la figure 5, l'arbre central est maintenu par un palier amont non visible et par le palier aval 34, et dans l'exemple de la figure 6, cet arbre AC est maintenu par le palier aval 34 et également par un palier médian basse pression, ces deux paliers ayant le même agencement que dans les exemples des figures 3 et 4 déjà décrites.

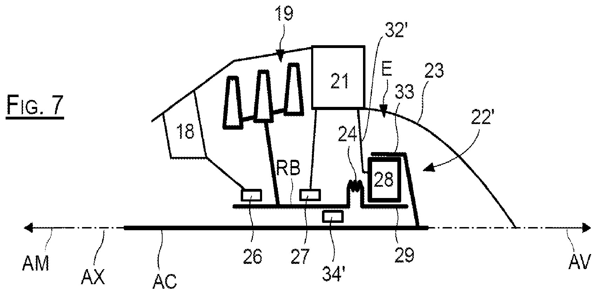

Dans les modes de réalisation des figures 2 à 6, le palier aval d'arbre central 34 est un palier fixe porté par le carter d'échappement 21 en étant situé en aval du réducteur 22 ou 22'. Complémentairement, ou alternativement comme représenté sur la figure 7, le palier aval d'arbre, repéré par 34', peut être un palier inter-arbres, qui entoure l'arbre AC pour le maintenir et le guidé en rotation, en étant entouré par le rotor RB, et en étant situé en aval du palier de rotor aval 27. Dans cette configuration, la portion aval de l'arbre central AC est ainsi maintenue par l'intermédiaire du rotor basse pression RB, et non pas directement par le carter d'échappement 21.

L'invention permet de supprimer des paliers additionnels usuellement prévus pour supporter l'arbre central dans le but de déplacer les fréquences propres de cet arbre hors de ses fréquences de rotation. Elle permet ainsi de limiter la mise en oeuvre de paliers complexes tels que les paliers SFD, et de réduire la précision d'équilibrage requise pour l'arbre central.

## Revendications

1. Turboréacteur à double flux comportant un arbre central (AC) entouré par un corps haute pression (CH) coaxiaux et indépendants en rotation, ce turboréacteur comportant depuis l'amont (AM) vers l'aval (AV) considérés selon le sens de circulation du flux qui le traverse lorsqu'il est en service :
- une soufflante (13) entraînée par l'arbre central (AC) ;
- un compresseur haute pression (16) et une turbine haute pression (17) faisant partie du corps haute pression (CH) ;
- un carter inter-turbines (18) ;
- une turbine basse pression (19) ;
- un carter d'échappement (21) ;
ce turboréacteur comportant en outre :
- un rotor basse pression (RB) qui entoure l'arbre central (AC) et qui comprend la turbine basse pression (19) ;
- un palier amont de rotor (26) porté par le carter inter-turbines (18) et qui guide en rotation le rotor basse pression (RB) en étant situé en aval du compresseur haute pression (16) ;
- un palier aval de rotor (27) porté par le carter d'échappement (21), et qui guide en rotation le rotor basse pression (RB) ;
- un réducteur (22, 22') par l'intermédiaire duquel le rotor basse pression (RB) entraine l'arbre central (AC), ce réducteur étant situé en aval du palier aval de rotor (27) ;
- un palier aval d'arbre (34, 34') qui guide en rotation l'arbre central (AC) en étant situé en aval du palier aval de rotor (27).

2. Turboréacteur selon la revendication 1, dans lequel le palier aval d'arbre (34) est porté par le carter d'échappement (21) en étant situé en aval du réducteur (22, 22').

3. Turboréacteur selon la revendication 1 ou 2, comprenant un palier médian basse pression (36) porté par le carter inter-turbines (18) et recevant l'arbre central (AC).

4. Turboréacteur selon l'une des revendications précédentes, comprenant un cône de sortie (23) porté par le carter d'échappement (21), et dans lequel le palier aval d'arbre (34) est situé dans un espace interne (E) du cône de sortie (23).

5. Turboréacteur selon la revendication 4, dans lequel le réducteur (22, 22') est situé à l'intérieur de l'espace interne (E) du cône de sortie (23).

6. Turboréacteur selon l'une des revendications précédentes, dans lequel le rotor basse pression (RB) est équipé d'un élément radialement flexible (24) situé entre le palier aval de rotor (27) et le réducteur (22).

7. Turboréacteur selon l'une des revendications précédentes, comportant un compresseur basse pression (14) entraîné par l'arbre central (AC) en étant situé entre la soufflante (13) et le compresseur haute pression (16).

8. Turboréacteur selon l'une des revendications précédentes, dans lequel le réducteur (22) est un réducteur épicycloïdal comprenant :
- des satellites (28) portés par un porte satellites (32) qui est porté par l'arbre central (AC) ;
- une couronne interne (29) qui est portée par le rotor basse pression (RB) ;
- une couronne externe (33) qui est portée par le carter d'échappement (21) ;
- chaque satellite (28) étant engrené avec la couronne interne (29) et la couronne externe (33).

9. Turboréacteur selon l'une des revendications 1 à 8, dans lequel le réducteur (22') est un réducteur planétaire comprenant :
- des satellites (28) portés par un porte satellites (32') qui est porté par le carter d'échappement (21) ;
- une couronne interne (29) qui est portée par le rotor basse pression (RB) ;
- une couronne externe (33) qui est portée par l'arbre central (AC) ;
- chaque satellite (28) étant engrené avec la couronne interne (29) et la couronne externe (33).

## Patentansprüche

1. Doppelstrom-Turbostrahltriebwerk, welches eine zentrale Welle (AC) beinhaltet, die von einem Hochdruckkörper (CH) umgeben ist, die koaxial und drehunabhängig sind, wobei dieses Turbostrahltriebwerk von stromaufwärts (AM) nach stromabwärts (AV), in der Zirkulationsrichtung des Stroms, der es durchquert, betrachtet, wenn es in Betrieb ist, beinhaltet:
- ein Gebläse (13), das von der zentralen Welle (AC) angetrieben wird;
- einen Hochdruckkompressor (16) und eine Hochdruckturbine (17), die zum Hochdruckkörper (CH) gehören;
- ein Zwischenturbinengehäuse (18);
- eine Niederdruckturbine (19);
- ein Abgasgehäuse (21);
wobei dieses Turbostrahltriebwerk weiter beinhaltet:
- einen Niederdruckrotor (RB), der die zentrale Welle (AC) umgibt, und der die Niederdruckturbine (19) umfasst;
- ein stromaufwärts gelegenes Rotorlager (26), das von dem Zwischenturbinengehäuse (18) getragen wird, und das den Niederdruckrotor (RB) in Drehung führt und sich dabei stromabwärts des Hochdruckkompressors (16) gelegen befindet;
- ein stromabwärts gelegenes Rotorlager (27), das von dem Abgasgehäuse (21) getragen wird, und das den Niederdruckrotor (RB) in Drehung führt;
- ein Getriebe (22, 22'), anhand dessen der Niederdruckrotor (RB) die zentrale Welle (AC) antreibt, wobei sich dieses Getriebe stromabwärts des stromabwärts gelegenen Rotorlagers (27) gelegen befindet;
- ein stromabwärts gelegenes Wellenlager (34, 34'), das die zentrale Welle (AC) in Drehung führt, und sich dabei stromabwärts des stromabwärts gelegenen Rotorlagers (27) gelegen befindet.

2. Turbostrahltriebwerk nach Anspruch 1, wobei das stromabwärts gelegene Wellenlager (34) von dem Abgasgehäuse (21) getragen wird, und sich dabei stromabwärts des Getriebes (22, 22') gelegen befindet.

3. Turbostrahltriebwerk nach Anspruch 1 oder 2, umfassend ein mittleres Niederdrucklager (36), das von dem Zwischenturbinengehäuse (18) getragen wird, und die zentrale Welle (AC) aufnimmt.

4. Turbostrahltriebwerk nach einem der vorstehenden Ansprüche, umfassend einen Ausgangskonus (23), der von dem Abgasgehäuse (21) getragen wird, und bei dem sich das stromabwärts gelegene Wellenlager (34) in einem Innenraum (E) des Ausgangskonus (23) befindet.

5. Turbostrahltriebwerk nach Anspruch 4, wobei sich das Getriebe (22, 22') im Inneren des Innenraums (E) des Ausgangskonus (23) befindet.

6. Turbostrahltriebwerk nach einem der vorstehenden Ansprüche, wobei der Niederdruckrotor (RB) mit einem radial flexiblen Element (24) ausgestattet ist, das sich zwischen dem stromabwärts gelegenen Rotorlager (27) und dem Getriebe (22) befindet.

7. Turbostrahltriebwerk nach einem der vorstehenden Ansprüche, das einen Niederdruckkompressor (14) beinhaltet, der von der zentralen Welle (AC) angetrieben wird, und sich dabei zwischen dem Gebläse (13) und dem Hochdruckkompressor (16) befindet.

8. Turbostrahltriebwerk nach einem der vorstehenden Ansprüche, wobei das Getriebe (22) ein Planetenuntersetzungsgetriebe ist, umfassend:
- Satelliten (28), die von einem Satellitenträger (32) getragen werden, der von der zentralen Welle (AC) getragen wird;
- einen Innenkranz (29), der von dem Niederdruckrotor (RB) getragen wird;
- einen Außenkranz (33), der von dem Abgasgehäuse (21) getragen wird;
- wobei jeder Satellit (28) mit dem Innenkranz (29) und dem Außenkranz (33) in Eingriff steht.

9. Turbostrahltriebwerk nach einem der Ansprüche 1 bis 8, wobei das Getriebe (22') ein Planetengetriebe ist, umfassend:
- Satelliten (28), die von einem Satellitenträger (32') getragen werden, der von dem Abgasgehäuse (21) getragen wird;
- einen Innenkranz (29), der von dem Niederdruckrotor (RB) getragen wird;
- einen Außenkranz (33), der von der zentralen Welle (AC) getragen wird;
- wobei jeder Satellit (28) mit dem Innenkranz (29) und dem Außenkranz (33) in Eingriff steht.

## Claims

1. A dual-flow turbojet engine including a central shaft (AC) surrounded by a high-pressure spool (CH), coaxial and rotatably independent, this turbojet engine including from upstream (AM) to downstream (AV) according to the direction of circulation of the flow that passes therethrough when it is operating:
- a fan (13) driven by the central shaft (AC);
- a high-pressure compressor (16) and a high-pressure turbine (17) belonging to the high-pressure spool (CH);
- an inter-turbine casing (18);
- a low-pressure turbine (19);
- an exhaust casing (21);
this turbojet engine further including:
- a low-pressure rotor (RB) which surrounds the central shaft (AC) and which comprises the low-pressure turbine (19);
- a rotor upstream journal (26) carried by the inter-turbine casing (18) and which rotatably guides the low-pressure rotor (RB) while being located downstream of the high-pressure compressor (16);
- a rotor downstream journal (27) carried by the exhaust casing (21), and which rotatably guides the low-pressure rotor (RB);
- a reduction gear (22, 22') through which the low-pressure rotor (RB) drives the central shaft (AC), this reduction gear being located downstream of the rotor downstream journal (27);
- a shaft downstream journal (34, 34') which rotatably guides the central shaft (AC) while being located downstream of the rotor downstream journal (27).

2. The turbojet engine according to claim 1, wherein the shaft downstream journal (34) is carried by the exhaust casing (21) while being located downstream of the reduction gear (22, 22').

3. The turbojet engine according to claim 1 or 2, comprising a low-pressure middle journal (36) carried by the inter-turbine casing (18) and receiving the central shaft (AC).

4. The turbojet engine according to one of the preceding claims, comprising an outlet cone (23) carried by the exhaust casing (21), and wherein the shaft downstream journal (34) is located in an inner space (E) of the outlet cone (23).

5. The turbojet engine according to claim 4, wherein the reduction gear (22, 22') is located inside the inner space (E) of the outlet cone (23).

6. The turbojet engine according to one of the preceding claims, wherein the low-pressure rotor (RB) is equipped with a radially-flexible element (24) located between the rotor downstream journal (27) and the reduction gear (22).

7. The turbojet engine according to one of the preceding claims, including a low-pressure compressor (14) driven by the central shaft (AC) while being located between the fan (13) and the high-pressure compressor (16).

8. The turbojet engine according to one of the preceding claims, wherein the reduction gear (22) is an epicyclic reduction gear (22) comprising:
- planets (28) carried by a planet carrier (32) which is carried by the central shaft (AC);
- an inner crown (29) which is carried by the low-pressure rotor (RB);
- an outer crown (33) which is carried by the exhaust casing (21);
- each planet (28) meshing with the inner crown (29) and the outer crown (33).

9. The turbojet engine according to one of claims 1 to 8, wherein the reduction gear (22') is a planetary reduction gear comprising:
- planets (28) carried by a planet carrier (32') which is carried by the exhaust casing (21);
- an inner crown (29) which is carried by the low-pressure rotor (RB);
- an outer crown (33) which is carried by the central shaft (AC);
- each planet (28) meshing with the inner crown (29) and the outer crown (33).
